# EUROPÄISCHE PATENTSCHRIFT

(11) **EP 0 899 856 B1**
(45) Veröffentlichungstag und Bekanntmachung des Hinweises auf die Patenterteilung: **18.12.2013**
(21) Anmeldenummer: 98810734.8
(22) Anmeldetag: 30.07.1998
(51) Int. Cl.: H02K 9/12, H02K 1/20

(54) **Turbogenerator**
Turbogenerator
Turbogénérateur

(30) Priorität: 23.08.1997 DE 19736785
(43) Veröffentlichungstag der Anmeldung: 03.03.1999
(73) Patentinhaber: Alstom Technology Ltd, 5400 Baden (CH)
(72) Erfinder: Hess, Stephan, 79713 Bad Säckingen (DE); Joho, Reinhard, 5024 Küttigen (CH); von Wolfersdorf, Jens, Dr., 5417 Untersiggenthal (CH); Zimmermann, Hans, / (CH)

(56) Entgegenhaltungen:
- EP-A- 0 739 076
- DE-A- 4 032 944
- GB-A- 730 515
- US-A- 4 876 470

## Beschreibung

### TECHNISCHES GEBIET

Die vorliegende Erfindung bezieht sich auf das Gebiet dynamoelektrischer Maschinen. Sie betrifft einen Turbogenerator mit einem Rotor und einem den Rotor konzentrisch umgebenden und von dem Rotor durch einen Luftspalt getrennten Stator, sowie mit einer Kühleinrichtung, bei welcher ein Hauptventilator ein durch entsprechende Kühlkanäle im Rotor und im Stator strömendes, gasförmiges Kühlmedium ansaugt und durch einen Kühler zurück in die Kühlkanäle drückt, wobei das Kühlmedium den Rotor in axialer Richtung durchströmt, erwärmt in den Luftspalt austritt und vom Luftspalt zurück zum Hauptventilator geführt wird.

Ein solcher Turbogenerator ist z.B. aus der Druckschrift US-A 4,379,975 bekannt.

### STAND DER TECHNIK

Grosse Turbogeneratoren müssen zur Gewährleistung eines störungsfreien Betriebs und zur Ausnutzung des vollen Leistungspotentials gekühlt werden, um die in den Wicklungen und Eisen des Rotors und Stators entstehende Verlustwärme abzuführen. Meist wird zur Kühlung ein gasförmiges Kühlmedium wie Luft oder auch Wasserstoff verwendet, welches durch entsprechende Bohrungen bzw. Schlitze in Rotor und Stator geschickt und anschliessend in einem Kühler wieder abgekühlt wird. Besondere Aufmerksamkeit gilt dabei den Wickelköpfen der Statorwicklung, an denen wegen der Leitergeometrie und der damit verbundenen Streufelder besonders viel Verlustwärme anfällt. Wird das durch den Rotor und Stator strömende Kühlmedium dabei von auf den Enden des Rotors sitzenden Hauptventilatoren aus dem Kühlbereich herausgesaugt und über einen nachgeschalteten Kühler wieder in den Kühlbereich gedrückt, spricht man von einer Saugkühlung ("reverse flow cooling").

Im Rotor fliesst das Kühlmedium von den Enden her axial in entsprechenden Bohrungen des Rotorleiters nach innen, tritt nach Aufnahme der Rotor-Verlustwärme radial in den Luftspalt zwischen Rotor und Stator aus und strömt im Luftspalt axial wieder nach aussen zu den Hauptventilatoren. Das aus dem Rotor austretende Kühlmedium hat dabei, insbesondere auch in den Endbereichen des Rotors, eine deutlich höhere Temperatur als der Stator.

Der Luftspalt zwischen Rotor und Stator ist vergleichsweise eng bemessen, so dass sich für die Rotorkühlung ein relativ hoher Strömungswiderstand ergibt, der die Zirkulation des Kühlmediums behindert und damit die Kühlwirkung begrenzt. Darüber hinaus gibt das im Rotor relativ stark erwärmte Kühlmedium beim Vorbeistreichen an der bzw. Auftreffen auf die Wand der Statorbohrung Wärme an den Stator ab, wodurch die Kühlung des Stators beeinträchtigt wird.

In der eingangs genannten Druckschrift wird vorgeschlagen, im Endbereich des Stators im Luftspalt ein kurzes, ringförmiges Luftspaltzylinderstück anzubringen, welches auf der Rückseite durch kühles Gas aus mehreren radialen Schlitzen im Stator angeströmt wird und auf der Vorderseite den aus dem Endbereich des Rotors austretenden Strom relativ warmen Gases vom Auftreffen auf die innere Oberfläche der Statorbohrung abhält bzw. ablenkt. Durch die Beschränkung des Luftspaltzylinderstücks auf die Endbereiche des Stators wird zwar der nachteilige Einfluss des besonders stark erwärmten Kühlgases aus dem Wickelkopfbereich des Rotors auf den Stator vermieden bzw. verringert, der übrige Bereich des Stators ist aber gleichwohl dem im Luftspalt strömenden, relativ warmen Kühlmedium ausgesetzt, so das gerade im achsennahen Bereich des Stators, wo sich die Statorwicklungen befinden, die Kühlung eher beeinträchtigt wird. Insbesondere wird durch diese Massnahme auch die Zirkulation des Kühlmedium durch den Rotor eher verschlechtert als verbessert.

Die Druckschrift GB-A-730 515 offenbart eine gasgekühlte dynamoelektrische Maschine mit einem geschlitzten Rotor mit Rotorwicklung, der konzentrisch von einem geschlitzten lamellierten Stator mit einer Statorwicklung (14) umgeben und durch einen Luftspalt getrennt ist. Für die Kühlung von Rotor und Stator sind auf der Rotorwelle am einen Ende ein Gebläse und an beiden Enden Ventilatoren vorgesehen. Das Gebläse wird für die Kühlung des Rotors eingesetzt, während die Ventilatoren die Kühlung des Stators übernehmen. Die Kühlung ist als Druckkühlung ausgeführt.

Aus der Druckschrift DE-A1-40 32 944 ist eine gasgekühlte elektrische Maschine bekannt, die ebenfalls druckgekühlt ist, und bei der zur Rückführung des erwärmten Kühlmediums aus dem Rotor und Luftspalt zu den Kühlern in der Mitte des Statorblechpakets durch beabstandete Teilpakete radiale Rückströmkanäle gebildet werden.

### DARSTELLUNG DER ERFINDUNG

Es ist Aufgabe der Erfindung, einen Turbogenerator zu schaffen, der sich durch eine verbesserte Kühlung des Rotors auszeichnet und zugleich auf einfache Weise eine thermische Entkopplung der Kühlung von Rotor und Stator ermöglicht.

Die Aufgabe wird bei einem Turbogenerator der eingangs genannten Art dadurch gelöst, dass das vom Rotor erwärmte Kühlmedium aus dem Luftspalt durch Ausströmkanäle im Stator radial nach aussen geführt und ausserhalb des Stators über eine Kühlluftrückführung zum Hauptventilator zurückgeführt wird. Durch die erfindungsgemässe Rückführung des aus dem Rotor austretenden Kühlmediums vom Luftspalt über radiale Ausströmkanäle im Stator kann die Zirkulation des Kühlmediums durch den Rotor unabhängig vom Luftspalt optimiert werden.

Eine erste bevorzugte Ausführungsform des Turbogenerators nach der Erfindung zeichnet sich dadurch aus, dass innerhalb der Ausströmkanäle Trennmittel angeordnet sind, welche verhindern, dass das durch die Ausströmkanäle nach aussen geführte erwärmte Kühlmedium mit dem Stator in Berührung kommt, und dass die Trennmittel quer zur Achse des Turbogenerators orientierte Trennblechpakete sind und normal zur Achse des Turbogenerators orientierte Distanzstege zwischen den Trennblechpaketen umfassen. Durch die Trennmittel wird verhindert, dass die Ströme des relativ warmen Kühlmediums aus dem Rotor bei ihrer Rückführung zum Hauptventilator Wärme an den Stator abgegeben und so die Kühlung des Stators beeinträchtigen. Durch den Einsatz von Trennblechpaketen als Trennmittel vereinfacht sich der Aufbau erheblich, weil die Trennblechpakete genauso aufgebaut werden können, wie das Statorblech selbst und Bestandteil des magnetischen Kreises sind. Dadurch, dass die für die Bildung der Ausströmkanäle ohnehin notwendigen Distanzstege gleichzeitig als Trennmittel verwendet werden, ergibt sich eine weitere Vereinfachung.

Eine zweite bevorzugte Ausführungsform des erfindungsgemässen Turbogenerators ist dadurch gekennzeichnet, dass im Stator zwischen den Ausströmkanälen radiale Einströmschlitze angeordnet sind, durch welche von aussen Kühlmedium zum Kühlen des Stators nach innen einströmt, und dass im Statorjoch Bohrungen und im Statorzahn Kühlkanäle angeordnet sind, welche quer zu den Einströmschlitzen und Ausströmkanälen verlaufend jeweils benachbarte Einströmschlitze und Ausströmkanäle miteinander verbinden. Hierdurch können die zur Rückführung des Kühlmediums aus dem Rotor vorhandenen Ausströmkanäle auf einfache Weise gleichzeitig dazu verwendet werden, auch das durch den Stator strömende Kühlmittel von innen nach aussen zurückzuführen. Werden in den Ausströmkanälen keine Trennmittel vorgesehen, vereinigen sich dort die beiden Kühlmediumströme aus dem Rotor und Stator.

In einer bevorzugten Weiterbildung dieser Ausführungsform sind jedoch innerhalb der Ausströmkanäle Trennmittel angeordnet, welche verhindern, dass das durch die Ausströmkanäle nach aussen geführte erwärmte Kühlmedium aus dem Rotor mit dem Stator in Berührung kommt, und welche quer zur Achse des Turbogenerators orientierte Trennblechpakete umfassen. Die Trennblechpakete sind von den Wänden des Stators beabstandet und bilden zwischen sich und den Wänden Kühlschlitze. Die Bohrungen im Statorjoch und die Kühlkanäle im Statorzahn münden an ihren den Ausströmkanälen zugewandten Enden jeweils in die Kühlschlitze. Hierdurch werden die Kühlmediumströme aus Rotor und Stator in den Ausströmkanälen getrennt voneinander rückgeführt, so dass bei geringem konstruktiven Aufwand die gegenseitige thermische Beeinflussung minimiert wird.

Eine andere bevorzugte Ausführungsform des Turbogenerators nach der Erfindung ist dadurch gekennzeichnet, dass die Kühlschlitze und die Einströmschlitze an ihren achsennahen Enden mit den Statorvornuten in Verbindung stehen, dass die Statorvornuten durch Abschlussmittel gegen den Luftspalt glatt abgeschlossen sind und Kühlkanäle bilden, welche vom Kühlmedium durchströmt werden, dass die Einströmschlitze zum Luftspalt hin jeweils durch ein erstes Einsatzstück glatt abgeschlossen sind, und dass die Kühlschlitze jeweils eines Ausströmkanals zum Luftspalt hin durch ein zweites Einsatzstück abgeschlossen sind, welches die Form eines offenen Rechteckprofils mit nach innen abgerundeten Kanten aufweist. Durch die Einbeziehung der Statorvornuten als Kühlkanäle wird die Kühlung des Stators im Bereich des Statorzahns weiter verbessert. Zugleich werden durch den glatten Abschluss zum Luftspalt hin die Oberflächenreibungsverluste des Rotors minimiert.

Weitere Ausführungsformen ergeben sich aus den abhängigen Ansprüchen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einem schematisierten Längsschnitt der einen Seite des Turbogenerators ein erstes bevorzugtes Ausführungsbeispiel der Erfindung;
- Fig. 2: einen vergrösserten Ausschnitt aus Fig. 1 zur besseren Darstellung der verschiedenen Kühlkanäle im Stator;
- Fig. 3: in einem ausschnittweisen Längsschnitt den Aufbau im Bereich des Statorzahnes eines bevorzugten beispielhaften Einströmschlitzes, wie er im erfindungsgemässen Turbogenerator eingesetzt werden kann;
- Fig. 4: in einem zu Fig. 3 entsprechenden Längsschnitt den Aufbau im Bereich des Statorzahnes eines bevorzugten beispielhaften Ausströmkanals, wie er im erfindungsgemässen Turbogenerator eingesetzt werden kann;
- Fig. 5: den ausschnittweisen Querschnitt durch den Ausströmkanal gemäss Fig. 4 mit zusätzlichen Oeffnungen in den Trennblechpaketen zur Vergleichmässigung der Strömung; und
- Fig. 6: im Querschnitt ein Variante zu Fig. 5, bei der durch eine entsprechende Bearbeitung der Trennblechpakete zusätzliche Schlitze zur Führung des Kühlmediums in der Nähe der Leiter gebildet werden.

### WEGE ZUR AUSFÜHRUNG DER ERFINDUNG

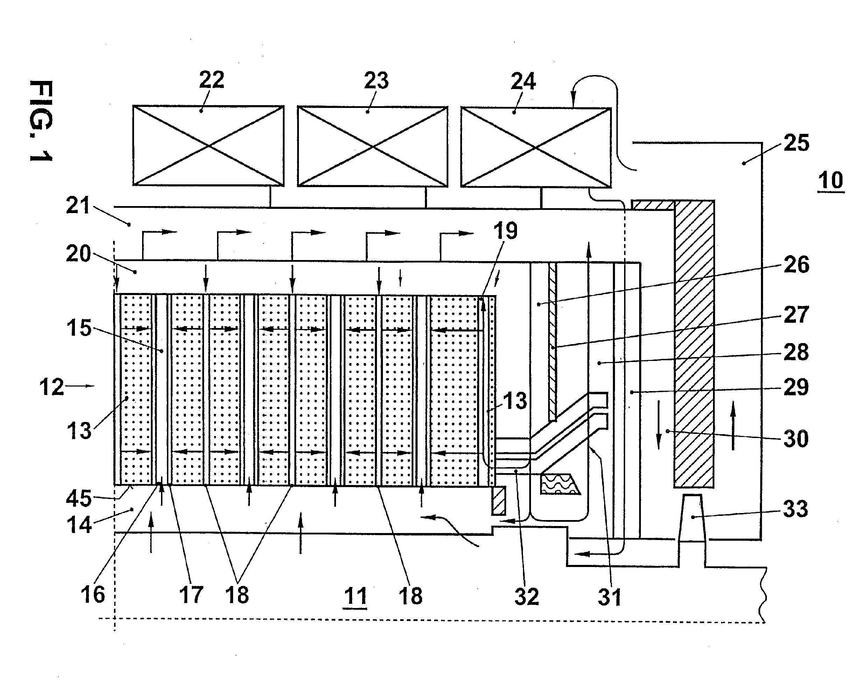

In Fig. 1 ist in einem schematisierten Längsschnitt der einen Seite des Turbogenerators ein erstes bevorzugtes Ausführungsbeispiel der Erfindung wiedergegeben. Der Turbogenerator 10 umfasst einen um eine Achse drehbar gelagerten Rotor 11, der konzentrisch von einem Stator 12 umgeben ist. Der Rotor, dessen innerer Aufbau und Wicklung nicht gezeigt ist, trägt am Ende einen Hauptventilator 33, der ein gasförmiges, durch den Rotor 11 und Stator 12 zirkulierendes Kühlmedium (Luft oder H₂) über einen Rückführkanal 30 ansaugt (Saugkühlung) und über einen Kühlerkanal 25 durch eine Reihe von Kühlern 22, 23 und 24 drückt, in welchem dem Kühlmedium die im Rotor 11 und Stator 12 aufgenommene Wärme wieder entzogen wird. Das abgekühlt Kühlmedium wird dann aufgeteilt und auf verschiedenen Wegen durch den Rotor 11 und Stator 12 geschickt, um die dort im beim Betrieb des Turbogenerators 10 in den Wicklungen und Eisen entstehende Verlustwärme aufzunehmen und abzuführen.

Ein erster Teilstrom des Kühlmediums wird über eine Kühlluftzuführung 29 zum Rotor 11 geführt und dort axial eingeleitet, um den Rotorwickelkopf und die Rotorwicklung zu kühlen (siehe zu den Einzelheiten beispielsweise die eingangs genannte Druckschrift US-A 4,379,975). Das im Rotor 11 erwärmte Kühlmedium tritt radial in den Luftspalt 14 zwischen Rotor 11 und Stator 12 aus und wird von dort über eine Mehrzahl von über die Statorlänge verteilt angeordneten Ausströmkanälen 15 radial nach aussen geführt, in einer ausserhalb des Stators 12 liegenden Kühlluftrückführung 21 gesammelt und über den Rückführkanal 30 zurück zum Hauptventilator 33 geleitet. Die Ueberführung des Kühlmediums aus den Ausströmkanälen 15 in die Kühlluftrückführung 21 erfolgt über ein Kammersystem, welches in Fig. 1 nicht explizit dargestellt ist.

Ein zweiter Teilstrom des Kühlmediums strömt aus einem der Kühler 22-24 in den Raum des Stators 12, in welchem der Statorwickelkopf 31 der Statorwicklung 32 frei überhängt, und welcher durch eine Trennwand 27 in einen Zuführbereich 26 und einen Abführbereich 28 unterteilt ist. Das Kühlmedium tritt in den Zuführbereich 26 ein, umströmt den Statorwickelkopf 31 und teilt sich in drei Teilströme auf (siehe die eingezeichneten Strömungspfeile), von denen der erste seitlich in das Statorjoch 13 eintritt und durch einen randseitigen Kühlschlitz 19 im Statorjoch 13 radial nach aussen geführt wird, der zweite in den Luftspalt 14 eintritt und mit dem aus dem Rotor 11 austretenden Kühlmediumstrom durch die Ausströmkanäle 15 nach aussen gelangt, und der dritte in den Abführbereich 28 umgelenkt wird, ein zweites mal den Statorwickelkopf 31 umströmt und in die Kühlluftrückführung 21 zurückgeführt wird.

Weitere Teilströme aus den Kühlern 22-24 werden durch ein nicht gezeigtes Kammersystem einer Kühlluftzuführung 20 auf eine Mehrzahl von Einströmschlitzen 18 aufgeteilt, die im Stator 12 radial von aussen nach innen führen und zwischen den Ausströmkanälen 15 angeordnet sind. In den Einströmschlitzen 18 strömt das Kühlmedium zum Luftspalt 14 hin, tritt jedoch nicht in den Luftspalt 14 ein, weil die Einströmschlitze 18 zum Luftspalt 14 hin abgeschlossen sind, sondern strömt in quer zu den Einströmschlitzen 18 im Stator 12 vorgesehenen Kühlkanälen (Pfeile in Fig. 1) zu den benachbarten Ausströmkanälen 15, und von dort nach aussen zurück in die Kühlluftrückführung 21. Die Führung der Kühlmediumströme aus dem Rotor 11 und dem Stator 12 in den Ausströmkanälen 15 erfolgt dabei getrennt. Zur Trennung werden bevorzugt Trennblechpakete 16, 17 verwendet, deren Aufbau und Anordnung nachfolgend noch näher beschrieben werden.

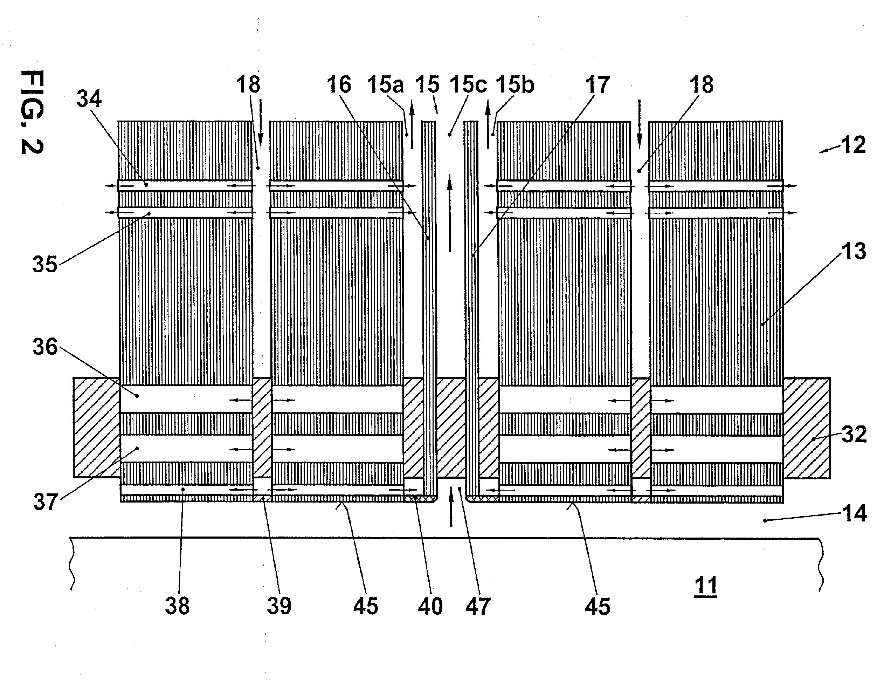

Die Führung der Ströme des Kühlmediums im Stator 12 ist aus der Darstellung in Fig. 2 ersichtlich, die einen vergrösserten Ausschnitt des Statorbereichs aus Fig. 1 wiedergibt. Der Ausschnitt umfasst einen Ausströmkanal 15 und zwei benachbarte Einströmschlitze 18. Der Ausströmkanal 15 enthält zwei Trennblechpakete 16 und 17 die jeweils von der Wand des Ausströmkanals 15 und untereinander beabstandet sind. Dadurch werden im Ausströmkanal 15 ein zentraler Kanal 15c und zwei seitlich angrenzende, getrennte Kühlschlitze 15a und 15b gebildet. Der zentrale Kanal 15c ist zum Luftspalt 14 hin offen. Durch ihn strömt das von Rotor 11 kommende, relativ stark erwärmte Kühlmedium nach aussen, ohne mit den Wänden des Stators 12 in Berührung zu kommen.

Im Statorjoch 13 sind um die Generatorachse verteilt Bohrungen 34, 35 angeordnet. Im Statorzahn, d.h., in dem Bereich des Stators 12, der die Nuten und Vornuten zur Aufnahme der Statorwicklung 32 enthält, sind zwischen den Statornuten Kühlkanäle 36, 37 angeordnet, welche - wie die Bohrungen 34, 35 - quer zu den Einströmschlitzen 18 und Ausströmkanälen 15 verlaufend jeweils benachbarte Einströmschlitze 18 und Ausströmkanäle 15a, 15b miteinander verbinden. Die Bohrungen 34, 35 im Statorjoch 13 und die Kühlkanäle 36, 37 im Statorzahn münden an ihren den Ausströmkanälen 15 zugewandten Enden jeweils in die Kühlschlitze 15a,b. Die Kühlschlitze 15a,b sind zum Luftspalt hin durch ein Einsatzstück 40 mit nach innen abgerundeten Kanten abgeschlossen. Die Einströmschlitze 18 sind zum Luftspalt 14 hin durch entsprechende Einsatzstücke 39 glatt abgeschlossen. Es ergibt sich so eine glatte Statorbohrung 45, welche die Oberflächenreibungsverluste des Rotors 11 im Luftspalt 14 minimiert. Das den Stator 12 kühlende Kühlmedium tritt in der Konfiguration gemäss Fig. 2 in die Einströmschlitze 18 ein, strömt durch die Bohrungen 34, 35 und Kühlkanäle 36, 37 zu den benachbarten Kühlschlitzen 15a,b und tritt dort wieder nach aussen aus dem Stator 12 aus. Anordnung, Zahl und Strömungsquerschnitt der Bohrungen 34, 35 und Kühlkanäle werden dabei so gewählt, dass der Stator 12 in Bereichen unterschiedlich starker Erwärmung auch unterschiedlich stark gekühlt wird. Zusätzlich werden zur Kühlung die Statorvornuten 38 herangezogen, die sowohl mit den Einströmschlitzen 18 als auch mit den Kühlschlitzen 15a,b in Verbindung stehen.

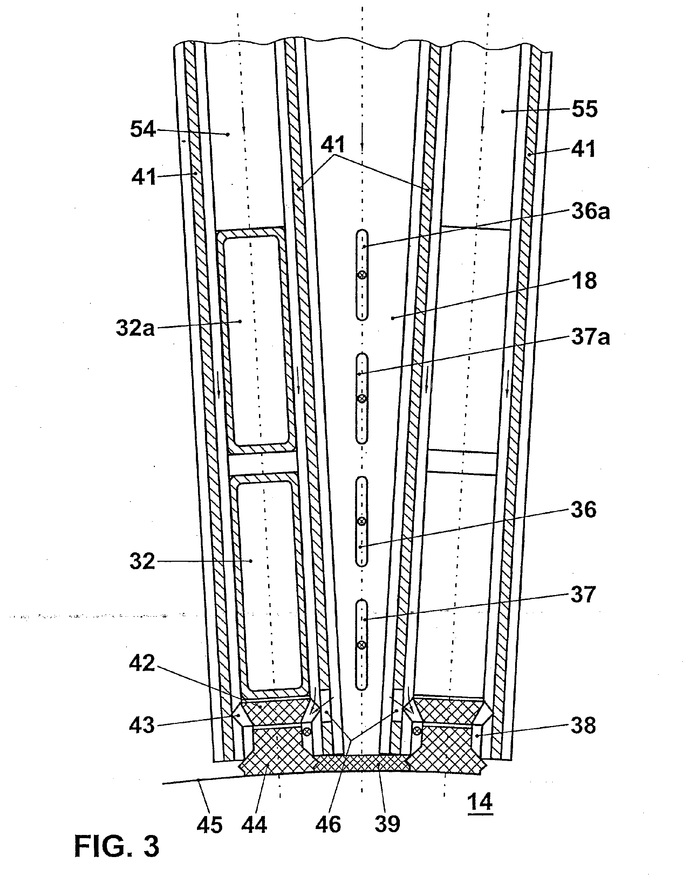

In einem Längsschnitt durch einen der Einströmschlitze (18 in Fig. 2) ist in Fig. 3 ein bevorzugtes Ausführungsbeispiel für den Aufbau eines solchen Einströmschlitzes gezeigt. Zur Trennung der benachbarten Blechpakete des Statorjochs sind auf beiden Seiten der Statornuten 54, 55, in den die Statorwicklung 32, 32a untergebracht ist, jeweils Distanzstege 41 angeordnet, welche zwischen den Statornuten 54, 55 die Seitenwände des Einströmschlitzes 18 bilden. Vom Einströmschlitz 18 gehen seitlich die Kühlkanäle 36, 37 bzw. 36a, 37a ab, die zur Optimierung der Kühlwirkung einen länglichen Querschnitt haben. Die Statorvornuten 38, die an sich durch die Distanzstege 41 von dem Einströmschlitz 18 abgetrennt sind, werden durch entsprechende Oeffnungen 46 in den trennenden Distanzstegen mit dem Einströmschlitz 18 verbunden. Die Nutverschlusskeile 42, mit denen die Wicklungen 32, 32a in den Statornuten 54, 55 fixiert werden, sind mit Abschrägungen 43 versehen, um eine ungehinderte Strömung des Kühlmediums aus dem Einströmschlitz 18 durch die Oeffnungen 46 sowie aus den Statornuten 54, 55 in die Statorvornuten 38 zu ermöglichen. Die Statorvornuten 38 sind zum Luftspalt 14 hin durch Verdrängungskörper 44 verschlossen, die einerseits eine glatte Oberfläche der Statorbohrung 45 gewährleisten und andererseits durch Querschnittsverringerung die Strömungsgeschwindigkeit des Kühlmediums in den Statorvornuten 38 und damit die Kühlwirkung erhöht.

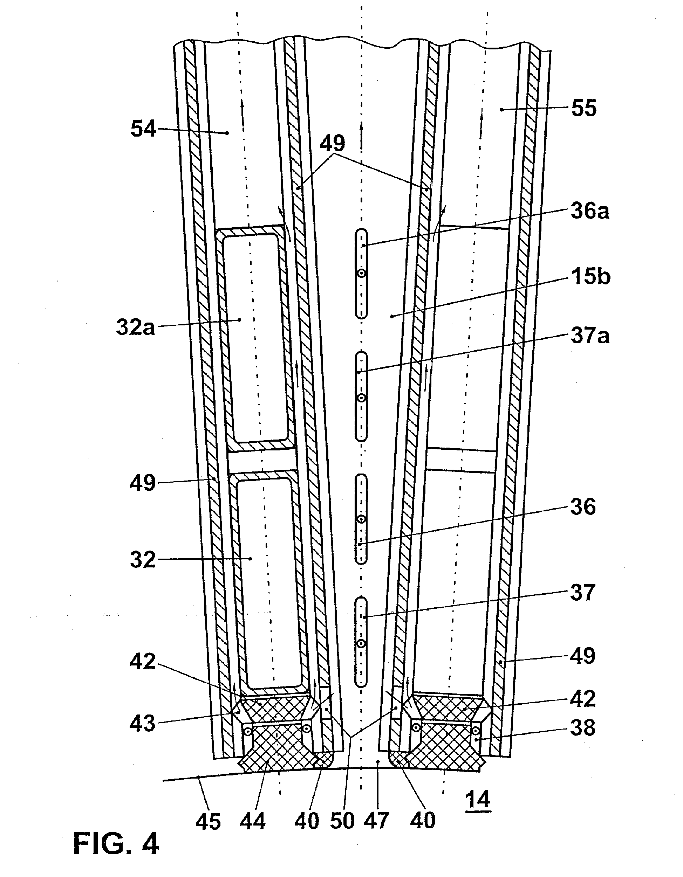

Der zu Fig. 3 entsprechende Längsschnitt durch die Kühlschlitze (z.B. 15b in Fig. 2) ist in Fig. 4 wiedergegeben. Auch hier sind zwischen der Wand des Ausströmkanals 15 bzw. des Stator 12 und dem ersten Trennblechpaket auf beiden Seiten jeder Statornut 54, 55 Distanzstege 49 angeordnet, die zwischen den Statornuten 54, 55 die Seitenwände des Kühlschlitzes 15b bilden. In den Kühlschlitz 15b münden die Kühlkanäle 36, 37 und 36a, 37a. Auch hier sind, um eine Verbindung zwischen dem Kühlschlitz 15b und den Statorvornuten 38 zu schaffen, Oeffnungen 50 in den trennenden Distanzstegen 49 vorgesehen. Deutlich zu sehen sind in Fig. 4 auch die nach innen abgerundeten Kanten des Einsatzstückes 40, die ein verlustarmes Einströmen des Kühlmediums aus dem Luftspalt 14 in den Kühlschlitz 15b sicherstellen. Weiterhin ist deutlich zu erkennen, dass der Kühlschlitz 15b nach aussen (oben) hin einen zunehmenden Querschnitt aufweist. Hierdurch wird eine Diffusorwirkung erreicht, die zu einer erwünschten Druckerhöhung führt.

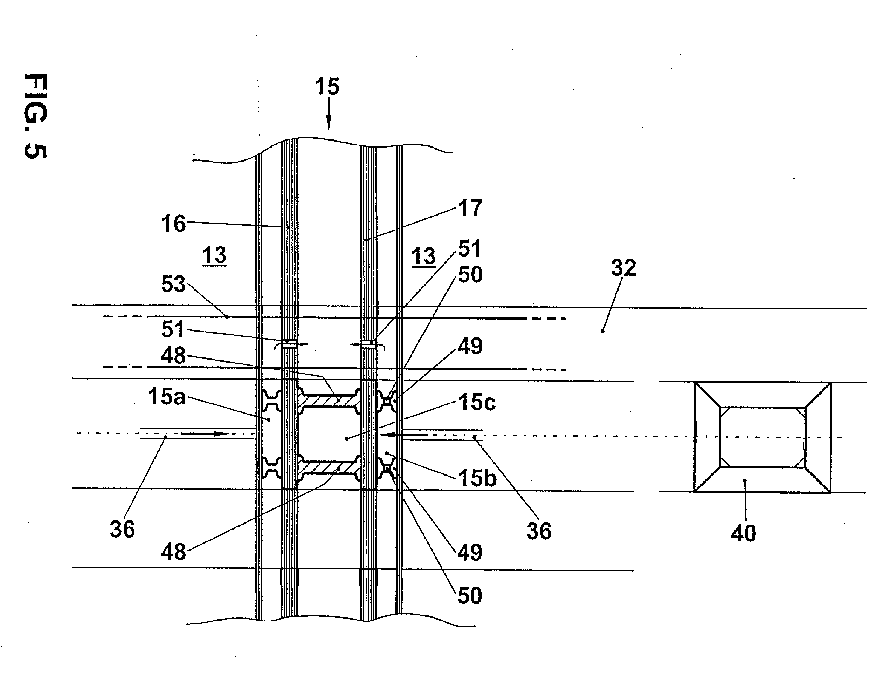

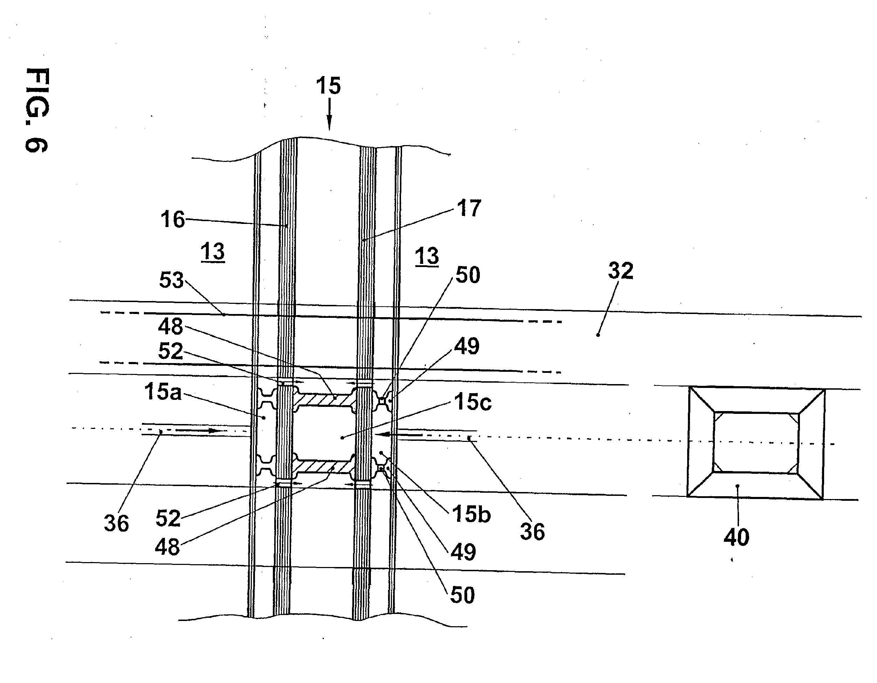

Der Querschnitt durch einen Ausströmkanal 15 gemäss Fig. 4 ist in Fig. 5 und 6 dargestellt. Neben den Distanzstegen 49, welche die Seitenwände der Kühlschlitze 15a,b bilden, sind hier auch die Distanzstege 48 zu sehen, welche zwischen den Trennblechpaketen 16, 17 angeordnet sind und die Seitenwände des zentralen Kanals 15c bilden. In beiden Figuren ist (für einen benachbarten Ausströmkanal) beispielhaft auch das Einsatzstück 40 gezeigt. In dem Ausführungsbeispiel der Fig. 5 sind in den Trennblechpaketen 16, 17 zur Vergleichmässigung der Strömung Oeffnungen 51 vorgesehen, durch welche das Kühlmedium hindurchtreten kann. In dem Ausführungsbeispiel der Fig. 6 weisen die Trennblechpakete 16, 17 im Bereich der Leiter 53 der Statorwicklung 32 Nuten auf, durch welche die Leiter 53 geführt sind, deren Breite so gewählt ist, dass zwischen dem Leitern 53 und den Trennblechpaketen 16, 17 Schlitze 52 zur Zirkulation des Kühlmediums frei bleiben. dadurch sind die Trennblechpakete - anders als die übrigen Blechpakete des Stators 12 - mechanisch, elektrisch und vor allem thermisch von den Leitern 53 der Statorwicklung 32 entkoppelt. Durch die entstehenden schmalen Schlitze 52 kann das Kühlmedium hindurchtreten und den Leiter 53 zusätzlich kühlen. Weiterhin werden die möglicherweise hohen elektrischen Verluste in den Trennblechpaketen 16, 17 nicht auf die Leiter 53 übertragen.

### BEZEICHNUNGSLISTE

- 10: Turbogenerator
- 11: Rotor
- 12: Stator
- 13: Statorjoch
- 14: Luftspalt
- 15: Ausströmkanal (Luftspalt)
- 15a, b: Kühlschlitz
- 15c: zentraler Kanal
- 16, 17: Trennblechpaket
- 18: Einströmschlitz
- 19: Kühlschlitz
- 20: Kühlluftzuführung (Stator)
- 21: Kühlluftrückführung
- 22, 23, 24: Kühler
- 25: Kühlerkanal
- 26: Zuführbereich
- 27: Trennwand
- 28: Abführbereich
- 29: Kühlluftzuführung (Rotor)
- 30: Rückführkanal
- 31: Statorwickelkopf
- 32, 32a: Statorwicklung
- 33: Hauptventilator
- 34, 35: Bohrung (Statorjoch)
- 36, 37: Kühlkanal (Statorzahn)
- 36a, 37a: Kühlkanal (Statorzahn)
- 38: Statorvornut
- 39: Einsatzstück
- 40: Einsatzstück (offenes Rechteckprofil)
- 41, 48, 49: Distanzsteg
- 42: Nutverschlusskeil
- 43: Abschrägung
- 44: Verdrängungskörper (Statorvornut)
- 45: Statorbohrung
- 46: Oeffnung (Distanzsteg 41)
- 47: Oeffnung (Ausströmkanal 15)
- 50: Oeffnung (Distanzsteg 49)
- 51: Oeffnung (Trennblechpaket)
- 52: Schlitz (Leiternut Trennblechpaket)
- 53: Leiter (Statorwicklung)
- 54, 55: Statornut

## Patentansprüche

1. Turbogenerator (10) mit einem Rotor (11) und einem den Rotor (11) konzentrisch umgebenden und von dem Rotor (11) durch einen Luftspalt (14) getrennten Stator (12), sowie mit einer Kühleinrichtung, bei welcher ein Hauptventilator (33) ein durch entsprechende Kühlkanäle im Rotor (11) und im Stator (12) strömendes, gasförmiges Kühlmedium ansaugt und durch einen Kühler (22, 23, 24) zurück in die Kühlkanäle drückt, wobei das Kühlmedium den Rotor (11) in axialer Richtung durchströmt, erwärmt in den Luftspalt (14) austritt und vom Luftspalt (14) zurück zum Hauptventilator (33) geführt wird, **dadurch gekennzeichnet, dass** das vom Rotor (11) erwärmte Kühlmedium aus dem Luftspalt (14) durch Ausströmkanäle (15) im Stator (12) radial nach aussen geführt und ausserhalb des Stators (12) über eine Kühlluftrückführung (21) zum Hauptventilator (33) zurückgeführt wird.

2. Turbogenerator nach Anspruch 1, **dadurch gekennzeichnet, dass** innerhalb der Ausströmkanäle (15) Trennmittel (16, 17) angeordnet sind, welche verhindern, dass das durch die Ausströmkanäle (15) nach aussen geführte erwärmte Kühlmedium mit dem Stator (12) in Berührung kommt.

3. Turbogenerator nach Anspruch 2, **dadurch gekennzeichnet, dass** die Trennmittel quer zur Achse des Turbogenerators (10) orientierte Trennblechpakete (16, 17) und normal zur Achse des Turbogenerators (10) orientierte Distanzstege (48) zwischen den Trennblechpaketen (16, 17) umfassen.

4. Turbogenerator nach einem der Ansprüche 1 bis 3, **dadurch gekennzeichnet, dass** die Ausströmkanäle (15) mit einem sich nach aussen hin vergrössernden Kanalquerschnitt ausgebildet sind.

5. Turbogenerator nach einem der Ansprüche 1 bis 4, **dadurch gekennzeichnet, dass** im Stator (12) zwischen den Ausströmkanälen (15) radiale Einströmschlitze (18) angeordnet sind, durch welche von aussen Kühlmedium zum Kühlen des Stators (12) nach innen einströmt, und dass im Statorjoch (13) Bohrungen (34, 35) und im Statorzahn Kühlkanäle (36, 37) angeordnet sind, welche quer zu den Einströmschlitzen (18) und Ausströmkanälen (15) verlaufend jeweils benachbarte Einströmschlitze (18) und Ausströmkanäle (15) miteinander verbinden.

6. Turbogenerator nach Anspruch 5, **dadurch gekennzeichnet, dass** innerhalb der Ausströmkanäle (15) Trennmittel (16, 17,; 48, 49) angeordnet sind, welche verhindern, dass das durch die Ausströmkanäle (15) nach aussen geführte erwärmte Kühlmedium aus dem Rotor (11) mit dem Stator (12) in Berührung kommt, und welche quer zur Achse des Turbogenerators (10) orientierte Trennblechpakete (16, 17) umfassen, dass die Trennblechpakete (16, 17) von den Wänden des Stators (12) beabstandet sind und zwischen sich und den Wänden Kühlschlitze (15a,b) bilden, und dass die Bohrungen (34, 35) im Statorjoch (13) und die Kühlkanäle (36, 37) im Statorzahn an ihren den Ausströmkanälen (15) zugewandten Enden jeweils in die Kühlschlitze (15a,b) münden.

7. Turbogenerator nach Anspruch 6, **dadurch gekennzeichnet, dass** die Kühlschlitze (15a,b) und die Einströmschlitze (18) an ihren achsennahen Enden mit den Statorvornuten (38) in Verbindung stehen, dass die Statorvornuten (38) durch Abschlussmittel (44) gegen den Luftspalt (14) glatt abgeschlossen sind und Kühlkanäle bilden, welche vom Kühlmedium durchströmt werden, dass die Einströmschlitze (18) zum Luftspalt (14) hin jeweils durch ein erstes Einsatzstück (39) glatt abgeschlossen sind, und dass die Kühlschlitze (15a,b) jeweils eines Ausströmkanals (15) zum Luftspalt (14) hin durch ein zweites Einsatzstück (40) abgeschlossen sind, welches die Form eines offenen Rechteckprofils mit nach innen abgerundeten Kanten aufweist.

8. Turbogenerator nach Anspruch 7, **dadurch gekennzeichnet, dass** die Trennblechpakete (16, 17) der Ausströmkanäle (15) durch erste Distanzstege (49) auf Abstand zu den Wänden des Stators (12) gehalten werden, welche Distanzstege (49) die Kühlschlitze (15a,b) zwischen benachbarten Statornuten seitlich begrenzen, dass in den Einströmschlitzen (18) zweite Distanzstege (41) angeordnet sind, welche die Einströmschlitze (18) zwischen benachbarten Statornuten seitlich begrenzen, und dass in den ersten und zweiten Distanzstegen (49 bzw. 41) Oeffnungen (50 bzw. 46) vorgesehen sind, durch welche die Ausströmkanäle (15) und Einströmschlitze (18) mit den benachbarten Statorvornuten (38)- in Verbindung stehen.

9. Turbogenerator nach einem der Ansprüche 7 und 8, **dadurch gekennzeichnet, dass** die Abschlussmittel Verdrängungskörper (44) umfassen, welche in die Statorvornuten (38) hineinragen und den Strömungsquerschnitt in den Statorvornuten (38) verringern.

10. Turbogenerator nach einem der Ansprüche 6 bis 9, **dadurch gekennzeichnet, dass** in den Trennblechpaketen (16, 17) zur Vergleichmässigung der Strömung Oeffnungen (51) vorgesehen sind.

11. Turbogenerator nach einem der Ansprüche 6 bis lo, **dadurch gekennzeichnet, dass** die Trennblechpakete (16, 17) im Bereich der Leiter (53) der Statorwicklung (32, 32a) Nuten aufweisen, durch welche die Leiter (53) geführt sind, und dass die Breite der Nuten so gewählt ist, dass zwischen dem Leitern (53) und den Trennblechpaketen (16, 17) Schlitze (52) zur Zirkulation des Kühlmediums frei bleiben.

## Claims

1. A turbo-generator (10) having a rotor (11) and a stator (12) concentrically surrounding the rotor (11) and separated from the rotor (11) by an air gap (14), and also having a cooling arrangement in which a main fan (33) draws in a gaseous cooling medium flowing through corresponding cooling passages in the rotor (11) and in the stator (12) and forces it through a cooler (22, 23, 24) back into the cooling passages, the cooling medium flowing through the rotor (11) in the axial direction, issuing in a heated state into the air gap (14) and being returned from the air gap (14) to the main fan (33), wherein the cooling medium heated by the rotor (11) is directed radially outward from the air gap (14) through outflow passages (15) in the stator (12) and is returned to the main fan (33) outside the stator (12) via a cooling-air return (21).

2. The turbo-generator as claimed in claim 1, wherein separating means (16, 17) are arranged inside the outflow passages (15) and prevent the heated cooling medium directed outward through the outflow passages (15) from coming into contact with the stator (12).

3. The turbo-generator as claimed in claim 2, wherein the separating means comprise laminated separating cores (16, 17) oriented transversely to the axis of the turbo-generator (10), and distance webs (48), oriented normal to the axis of the turbo-generator (10), between the laminated separating cores (16, 17).

4. The turbo-generator as claimed in one of claims 1 to 3, wherein the outflow passages (15) are formed with a passage cross section increasing toward the outside.

5. The turbo-generator as claimed in one of claims 1 to 4, wherein radial inflow slits (18) through which cooling medium for cooling the stator (12) flows in from the outside to the inside are arranged in the stator (12) between the outflow passages (15), and wherein bores (34, 35) are arranged in the stator yoke (13) and cooling passages (36, 37) are arranged in the stator tooth, which bores (34, 35) and cooling passages (36, 37), running transversely to the inflow slits (18) and outflow passages (15), in each case connect adjacent inflow slits (18) and outflow passages (15) to one another.

6. The turbo-generator as claimed in claim 5, wherein separating means (16, 17; 48, 49) are arranged inside the outflow passages (15), which separating means (16, 17; 48, 49) prevent the heated cooling medium which comes from the rotor (11) and is directed outward through the outflow passages (15) from coming into contact with the stator (12) and which comprise laminated separating cores (16, 17) oriented transversely to the axis of the turbo-generator (10), wherein the laminated separating cores (16, 17) are at a distance from the walls of the stator (12) and form cooling slits (15a, b) between themselves and the walls, and wherein the bores (34, 35) in the stator yoke (13) and the cooling passages (36, 37) in the stator tooth in each case lead into the cooling slits (15a, b) at their ends facing the outflow passages (15).

7. The turbo-generator as claimed in claim 6, wherein the cooling slits (15a, b) and the inflow slits (18) are connected to the preliminary stator slots (38) at their ends close to the axis, wherein the preliminary stator slots (38) are closed off flush from the air gap (14) by closure means (44) and form cooling passages through which the cooling medium flows, wherein the inflow slits (18) are closed off flush toward the air gap (14) in each case by a first insert piece (39), and wherein the cooling slits (15a, b) of each outflow passage (15) are closed off toward the air gap (14) by a second insert piece (40) which has the form of an open rectangular profile having edges rounded off toward the inside.

8. The turbo-generator as claimed in claim 7, wherein the laminated separating cores (16, 17) of the outflow passages (15) are held at a distance from the walls of the stator (12) by first distance webs (49) which laterally define the cooling slits (15a, b) between adjacent stator slots, wherein second distance webs (41) which laterally define the inflow slits (18) between adjacent stator slots are arranged in the inflow slits (18), and wherein openings (50 and 46) through which the outflow passages (15) and inflow slits (18) are connected to the adjacent preliminary stator slots (38) are provided in the first and second distance webs (49 and 41 resp.).

9. The turbo-generator as claimed in either of claims 7 and 8, wherein the closure means comprise displacement bodies (44), which project into the preliminary stator slots (38) and reduce the cross section of flow in the preliminary stator slots (38).

10. The turbo-generator as claimed in one of claims 6 to 9, wherein openings (51) are provided in the laminated separating cores (16, 17) for evening out the flow.

11. The turbo-generator as claimed in one of claims 6 to 10, wherein the laminated separating cores (16, 17), in the region of the conductors (53) of the stator winding (32, 32a), have slots through which the conductors (53) are run, and wherein the width of the slots is selected in such a way that slits (52) for the circulation of the cooling medium remain free between the conductors (53) and the laminated separating cores (16, 17).

## Revendications

1. Turbogénérateur (10) comprenant un rotor (11) et un stator (12) entourant concentriquement le rotor (11) et séparé du rotor (11) par un entrefer (14), et comprenant un dispositif de refroidissement, dans lequel un ventilateur principal (33) aspire un fluide de refroidissement gazeux s'écoulant à travers des canaux de refroidissement correspondants dans le rotor (11) et dans le stator (12) et le refoule dans les canaux de refroidissement à travers un radiateur (22, 23, 24), le fluide de refroidissement s'écoulant à travers le rotor (11) dans la direction axiale, sortant sous forme réchauffée dans l'entrefer (14) et étant ramené depuis l'entrefer (14) jusqu'au ventilateur principal (33), **caractérisé en ce que** le fluide de refroidissement réchauffé par le rotor (11) est guidé radialement vers l'extérieur hors de l'entrefer (14) à travers des canaux de sortie (15) dans le stator (12) et est ramené au ventilateur principal (33) à l'extérieur du stator (12) par le biais d'une recirculation d'air de refroidissement (21).

2. Turbogénérateur selon la revendication 1, **caractérisé en ce qu'**à l'intérieur des canaux de sortie (15) sont disposés des moyens de séparation (16, 17) qui empêchent que le fluide de refroidissement réchauffé guidé vers l'extérieur à travers les canaux de sortie (15) ne vienne en contact avec le stator (12).

3. Turbogénérateur selon la revendication 2, **caractérisé en ce que** les moyens de séparation comprennent des paquets de tôles de séparation (16, 17) orientés transversalement à l'axe du turbogénérateur (10) et des nervures d'espacement (48) orientées perpendiculairement à l'axe du turbogénérateur (10) entre les paquets de tôles de séparation (16, 17).

4. Turbogénérateur selon l'une quelconque des revendications 1 à 3, **caractérisé en ce que** les canaux de sortie (15) sont réalisés avec une section transversale de canal augmentant vers l'extérieur.

5. Turbogénérateur selon l'une quelconque des revendications 1 à 4, **caractérisé en ce que** des fentes d'afflux radiales (18) sont disposées dans le stator (12) entre les canaux de sortie (15), à travers lesquelles fentes d'afflux radiales afflue vers l'intérieur depuis l'extérieur du fluide de refroidissement servant à refroidir le stator (12), et **en ce que** dans la culasse du stator (13) sont pratiqués des alésages (34, 35) et dans la dent de stator sont réalisés des canaux de refroidissement (36, 37) qui s'étendent transversalement aux fentes d'afflux (18) et aux canaux de sortie (15) et relient entre eux à chaque fois des fentes d'afflux (18) et des canaux de sortie (15) adjacents.

6. Turbogénérateur selon la revendication 5, **caractérisé en ce qu'**à l'intérieur des canaux de sortie (15) sont disposés des moyens de séparation (16, 17 ; 48, 49) qui empêchent que le fluide de refroidissement réchauffé guidé vers l'extérieur à travers les canaux de sortie (15) ne vienne en contact depuis le rotor (11) avec le stator (12), et qui comprennent des paquets de tôles de séparation (16, 17) orientés transversalement à l'axe du turbogénérateur (10), **en ce que** les paquets de tôles de séparation (16, 17) sont espacés des parois du stator (12) et forment entre eux et les parois des fentes de refroidissement (15a,b) et **en ce que** les alésages (34, 35) dans la culasse du stator (13) et les canaux de refroidissement (36, 37) dans la dent de stator débouchent au niveau de leurs extrémités tournées vers les canaux de sortie (15) à chaque fois dans les fentes de refroidissement (15a,b).

7. Turbogénérateur selon la revendication 6, **caractérisé en ce que** les fentes de refroidissement (15a,b) et les fentes d'afflux (18) sont en liaison au niveau de leurs extrémités proches de l'axe avec des pré-rainures de stator (38), **en ce que** les pré-rainures de stator (38) sont fermées de manière lisse par des moyens de fermeture (44) contre l'entrefer (14) et forment des canaux de refroidissement qui sont parcourus par le fluide de refroidissement, **en ce que** les fentes d'afflux (18) sont fermées de manière lisse vers l'entrefer (14) à chaque fois par une première pièce d'insertion (39), et **en ce que** les fentes de refroidissement (15a,b) d'un canal de sortie respectif (15) sont fermées vers l'entrefer (14) par une deuxième pièce d'insertion (40) qui présente la forme d'un profilé rectangulaire ouvert avec des bords arrondis vers l'intérieur.

8. Turbogénérateur selon la revendication 7, **caractérisé en ce que** les paquets de tôles de séparation (16, 17) des canaux de sortie (15) sont maintenus par des premières nervures d'espacement (49) à distance des parois du stator (12), lesquelles nervures d'espacement (49) limitent latéralement les fentes de refroidissement (15a,b) entre des rainures de stator adjacentes, **en ce que** dans les fentes d'afflux (18) sont disposées des deuxièmes nervures d'espacement (41), qui limitent latéralement les fentes d'afflux (18) entre des rainures de stator adjacentes, et **en ce que** dans les premières et deuxièmes nervures d'espacement (49, respectivement 41) sont prévues des ouvertures (50, respectivement 46) à travers lesquelles les canaux de sortie (15) et les fentes d'afflux (18) sont en liaison avec les pré-rainures de stator adjacentes (38).

9. Turbogénérateur selon l'une quelconque des revendications 7 et 8, **caractérisé en ce que** les moyens de fermeture comprennent des corps de déplacement (44) qui pénètrent dans les pré-rainures de stator (38) et qui réduisent la section transversale d'écoulement dans les pré-rainures de stator (38).

10. Turbogénérateur selon l'une quelconque des revendications 6 à 9, **caractérisé en ce que** dans les paquets de tôles de séparation (16, 17) sont prévues des ouvertures (51) pour uniformiser l'écoulement.

11. Turbogénérateur selon l'une quelconque des revendications 6 à 10, **caractérisé en ce que** les paquets de tôles de séparation (16, 17) présentent, dans la région des conducteurs (53) de l'enroulement statorique (32, 32a), des rainures à travers lesquelles les conducteurs (53) sont guidés, et **en ce que** la largeur des rainures est sélectionnée de telle sorte qu'entre les conducteurs (53) et les paquets de tôles de séparation (16, 17) subsistent des fentes (52) pour la circulation de fluide de refroidissement.
